**Europäisches Patentamt**

**European Patent Office**

**Office européen des brevets**

(19)

(11) Veröffentlichungsnummer: **0 487 113 A1**

# (12) EUROPÄISCHE PATENTANMELDUNG

(21) Anmeldenummer: **91120042.6**

(22) Anmeldetag: **25.11.91**

(51) Int. Cl.5: **G06F 1/16, A45C 5/12**

(30) Priorität: **23.11.90 DE 9015988 U**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **TELCON EDV-Systemberatungs GmbH**
**Prinzregentenstrasse 120**
**W-8000 München 80(DE)**

(72) Erfinder: **Alram, Stefan**
**Ebenfeld 11**
**W-8330 Eggenfelden(DE)**
Erfinder: **Brandl, Andreas**
**Abt-Williramstrasse 36**
**W-8017 Ebersberg(DE)**

(74) Vertreter: **Zumstein, Fritz, Dr. et al**
**Zumstein & Klingseisen Patentanwälte**
**Bräuhausstrasse 4**
**W-8000 München 2(DE)**

(54) **Tragbares Büro-Arbeitsgerät.**

(57) Tragbares Büro-Arbeitsgerät mit einem Aufbau nach Art und Größe eines Aktenkoffers, in einer oder in dessen beiden Kofferschalen (1, 2) wenigstens ein Laptop-Gerät (3) und ein Drucker (5) sowie eine gemeinsame Stromversorgungseinrichtung gegebenenfalls mit weiteren Geräten, wie Telefax-Gerät und Telefon, fest installiert sind. Auf diese Weise wird ein kompaktes, einheitliches Büro-Arbeitsgerät zur Verfügung gestellt, mit dem verschiedene Büroarbeiten abgewickelt werden können.

Fig. 1

EP 0 487 113 A1

Die Erfindung betrifft ein tragbares Büro-Arbeitsgerät.

Es sind verschiedene tragbare Geräte, wie als Laptop bezeichnete tragbare Computer, tragbare Telefongeräte und dergleichen bekannt, durch die unterwegs zeit- und standortunabhängig Büroarbeiten abgewickelt werden können.

Da es sich um einzelne Geräte mit jeweils eigener Stromversorgung handelt, ist die Handhabung und der Transport der Geräte umständlich.

Der Erfindung liegt die Aufgabe zugrunde, ein tragbares Büro-Arbeitsgerät zur Verfügung zu stellen, das vielseitig einsetzbar und in der Handhabung einfach ist sowie bequem transportiert werden kann.

Dies wird erfindungsgemäß erreicht durch einen Aufbau nach Art und Große eines Aktenkoffers, in dessen beiden Kofferschalen die für die vorgesehenen Büroarbeiten erforderlichen Geräte wie Laptop-Gerät, Drucker, gegebenenfalls Telefax-Gerät und Telefon sowie eine gemeinsame Stromversorgungseinrichtung fest installiert sind.

Auf diese Weise wird ein kompaktes, einheitliches Büro-Arbeitsgerät zur Verfügung gestellt, mit dem verschiedene Büroarbeiten abgewickelt werden können. Gegenüber Einzelgeräten wird durch die gemeinsame Stromversorgung eine Gewichtsersparnis erzielt und durch die feste räumliche Zuordnung der Geräte in einem Aktenkoffer die Handhabung und der Transport wesentlich erleichtert.

Vorteilhafte Ausgestaltungen der Erfindung sind in der nachfolgenden Beschreibung und in den Ansprüchen angegeben.

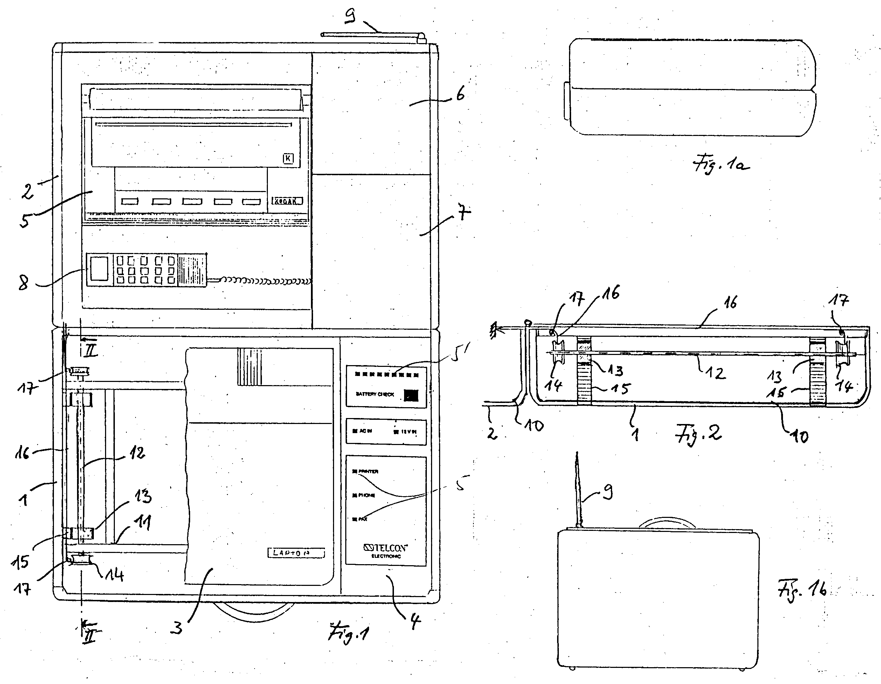

Eine beispielsweise Ausführungsform der Erfindung wird nachfolgend anhand der Zeichnung näher erläutert. Es zeigen

Fig. 1

eine Draufsicht auf die aufgeklappten Schalen eines Aktenkoffers mit darin angeordneten Geräten in schematischer Darstellung, wobei

Fig. 1a und 1b

den geschlossenen Koffer in einer Seitenansicht und in einer Vorderansicht zeigen,

Fig. 2

eine schematische Schnittansicht längs der Linie II-II in Fig. 1,

Fig. 3

ein Blockschaltbild der gemeinsamen Stromversorgungseinrichtung,

Fig. 4

eine Draufsicht auf eine Kofferschale, von der die andere Kofferschale abnehmbar ist,

Fig. 5

eine schematische Schnittansicht längs der Linie III-III in Fig. 4,

Fig. 6

eine schematische Schnittansicht längs der Linie IV-IV in Fig. 4, und

Fig. 7

einen Stecker mit seiner Pinbelegung.

Fig. 1 zeigt schematisch in einer Draufsicht auf einen geöffneten Aktenkoffer in an sich bekannter Weise durch Scharniere gelenkig miteinander verbundene Kofferschalen 1, 2. In der Kofferschale 1 ist ein Laptop-Gerät 3 angeordnet, das mit geschlossenem Display-Teil teilweise dargestellt ist. Neben dem Laptop-Gerät 3 füllt eine Abdeckplatte 4 über einer darunter angeordneten Platine die Öffnung der Kofferschale 1 im wesentlichen aus. Auf der Abdeckplatte 4 sind Anzeigelampen 5 für verschiedene Funktionen angebracht, beispielsweise für die Anzeige des Batterieladezustandes, die Art der Stromversorgung (12 V oder 220 V), Anzeige des eingeschalteten Gerätes und dergleichen.

In der Kofferschale 2 ist ein Drucker 5 und daneben ein Gehäuseteil 6 für Akkus sowie ein Telefonreceiver 7 angeordnet, dessen Hörer- und Wählerteil 8 in einer entsprechenden Ausnehmung im Kofferaufbau einsetzbar und herausnehmbar angebracht ist. Mit 9 ist eine ausziehbare oder umklappbare Antenne für das eingebaute Telefon bezeichnet.

Es kann ein spezieller, für die Aufnahme der einzelnen Geräte vorgefertigter Kofferaufbau vorgesehen werden. Zweckmäßigerweise wird ein handelsüblicher Hartschalenkoffer, Leder-, Holzkoffer oder dergleichen vorgesehen, der vorzugsweise zwei etwa gleich tiefe Schalen aufweist und für die Aufnahme der Geräte entsprechend ausgerüstet wird. Hierzu wird in jeder Kofferschale eine vorgefertigte Wanne 10 z.B. aus Aluminiumblech oder Kunststoff vorgesehen, wie sie in Fig. 2 schematisch angedeutet ist. Die Wanne 10 wird in der jeweiligen Kofferschale durch Kleben, Schrauben oder eine andere Befestigungsart wie Mieten befestigt und sie ist mit im einzelnen nicht dargestellten Halteelementen für die einzelnen Einbauteile versehen, die vorzugsweise so ausgebildet sind, daß beispielsweise die Geräte 3, 5 und 7 durch eine Steck- und/oder Schnappverbindung fest mit der Wanne verbunden werden können. Die Platine unter der Abdeckplatte 4 und das Gehäuse 6 für die Akkus können mit der Wanne 10 verschraubt sein.

Damit das Laptop-Gerät 3 einerseits möglichst platzsparend in dem geschlossenen Kofferaufbau untergebracht werden kann und andererseits eine bequeme Arbeitshöhe bei aufgeklapptem Koffer relativ zum Rand der Kofferschale hat, ist bei dem dargestellten Ausführungsbeispiel das Laptop-Gerät 3 auf einem rahmenartigen Träger 11 befestigt, der mittels einer Hubeinrichtung in der Wanne 10 bzw. in der betreffenden Kofferschale 1 verstellbar geführt ist. Hierzu sind auf gegenüberliegenden Seiten des Trägers 11 Spindeln 12 drehbar gelagert, auf denen jeweils zwei Ritzel 13 und zwei Seilrollen 14 in einem Abstand voneinander befestigt sind. Die Ritzel 13 stehen mit an der Wanne befestigten Zahnleisten 15 in Eingriff, während an den Seilrollen 14 jeweils ein Ende eines Seiles 16 befestigt ist, das über Umlenkstifte oder -rollen 17 zur anderen Kofferschale 2 geführt und an dieser bzw. an der in dieser Kofferschale eingesetzten Wanne befestigt ist, wie Fig. 2 schematisch zeigt. Beim Öffnen des Koffers werden die Seile 16 durch die Schwenkbewegung der Kofferschale 2 von den Seilrollen 14 abgezogen, so daß die Seilrollen in Drehung versetzt werden. Diese Drehbewegung wird über die Spindeln 12 auf die Ritzel 13 übertragen, die sich längs der Zahnleisten 15 nach oben bewegen, so daß der Träger 11 mit dem darauf befestigten Laptop-Gerät 3 angehoben wird. Fig. 2 zeigt schematisch die angehobene Stellung des Trägers. In der angehobenen Stellung befindet sich die Tastatur des Laptop-Gerätes über dem Rand bzw. auf der Höhe des Randes der Kofferschale 1, so daß das Arbeiten am Laptop-Gerät durch den Kofferrand nicht behindert wird. Beim Schließen des Koffers drückt das Eigengewicht des Laptop-Gerätes 3 den Träger 11 nach unten, wobei die Seile 16 auf den Seilrollen 14 aufgewickelt werden. Im geschlossenen Zustand kann somit das Laptop-Gerät 3 in platzsparender Weise auf dem Schalenboden aufliegen.

Anstelle des beschriebenen mechanischen Antriebs der Hubeinrichtung kann auch eine elektrische Antriebseinrichtung vorgesehen werden, wobei ein nicht dargestellter Antriebsmotor von den im Kofferaufbau vorgesehenen Akkus gespeist und durch einen Schalter nach dem Öffnen des Koffers in Betrieb gesetzt werden kann.

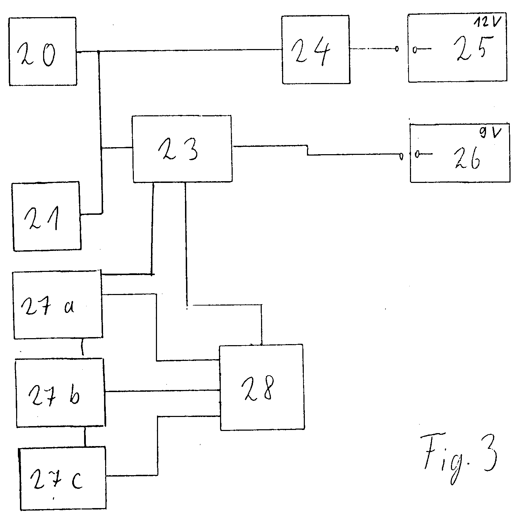

Fig. 3 zeigt schematisch ein Blockschaltbild der auf der Platine unter der Abdeckplatte 4 vorgesehenen Schalt- und Steuereinrichtungen. Mit 20 ist ein Netzteil (220 V - 12 V) bezeichnet, das den Eingang für eine externe Stromversorgung bildet. 21 ist ein Eingangsteil für externe Stromversorgung durch eine 12 V-Autobatterie über den Zigarettenanzünder eines Kraftfahrzeugs. Dieser Eingangsteil 21 ist mit einer Stabiliesierungseinrichtung versehen, die mittels einer Diode die von der Autobatterie eingehende Spannung (Spitzenwerte bis 13,7 V) um 0,7 V abschwächt. Hierdurch wird der Spannungswert konstant gehalten und es erübrigt sich die zusätzliche Verwendung eines Kfz-Adapters. An den Netzteil 20 und den Eingangsteil 21 ist ein Spannungsregler 23 angeschlossen, der die Spannung von 12 V auf einen Spannungsfestwert von 9 V abschwächt. Daran schließt sich ein Spannungsverteiler 24 an, der den ankommenden Ladestrom zu den im Kofferaufbau installierten Akkus (9 V bzw. 12 V) leitet. Durch die im einzelnen nicht dargestellten Akkus ist ein netzunabhängiger Betrieb der im Kofferaufbau vorgesehenen Geräte möglich, die ansonsten auch mit Netzanschluß betrieben werden können. Mit 25 und 26 ist jeweils eine Kontrolleinheit für die Akkukapazität von 9 V bzw. 12 V bezeichnet, die auf der Platine vorgesehen ist. Die optische Überprüfung des Ladezustandes der Akkus erfolgt über eine in Fig. 1 angedeutete Leuchtdiodenreihe 5'. Es kann eine Ein/Aus-Schalteinheit 27 für das direkte Bedienen der Geräte über die Schaltplatine vorgesehen sein, so daß sich ein Zuschalten am jeweiligen Gerät selbst erübrigt. Bei dem dargestellten Ausführungsbeispiel ist 27a eine Ein/Aus-Schalteinheit für das eingebaute Telefon, 27b eine Ein/Aus-Schalteinheit für das Telefaxgerät bzw. ein Modem mit Akustikkoppler und 27c eine Ein/Aus-Schalteinheit für den Drucker 5. Diese Baueinheiten sind an ein Stekkerelement 28 für eine Anschlußplatine angeschlossen, von der aus die Ansteuerung der einzelnen Geräte und die interne Stromversorgung erfolgt. Die Schalteinheit 27 kann auch nur zur Stromfreigabe zum automatischen Wiederaufladen der Endgeräte Telefon und Laptop vorgesehen sein, wobei zur Inbetriebnahme Telefon und Laptop separat eingeschaltet werden.

Für den Netz- bzw. Autobatterieanschluß wird in einer der Kofferschalen eine Bohrung für eine dreipolige Anschlußbuchse vorgesehen, in die ein zum Netz oder zum Zigarettenanzünder eines kalten Kraftfahrzeugs führendes Kabel eingesteckt werden kann.

Anstelle des in Fig. 1 bei 8 dargestellten Telefonhörers kann auch ein Akustikkoppler in dem Kofferaufbau vorgesehen werden.

Als Telefaxgerät wird eine Faxkarte vorgesehen, die im Laptop-Gerät 3 oder in einer im Kofferaufbau vorgesehenen Box eingesetzt werden kann. Im ersteren Falle wird die Information von der Faxkarte über das Laptop-Gerät an den Drucker gegeben und im anderen Falle wird die in eine Box eingesetzte Faxkarte durch einen Stecker mit dem Telefon verbunden, wobei der Ausdruck ebenfalls über den Drucker 5 erfolgt.

Anstelle der verschiedenen Hubeinrichtungen kann auch ein von Hand betätigbarer Hebel vorgesehen werden, der seitlich am Laptop-Gerät oder an einer beliebigen Stelle angelenkt ist und mit dem die Hubeinrichtung betätigt werden kann, die z.B. aus Gelenkhebeln aufgebaut sein kann. Es ist auch ein pneumatischer oder hydraulischer Antrieb für die Hubeinrichtung möglich.

Die Position der Geräte in den Kofferschalen kann auch anders als dargestellt vorgesehen sein. Ferner können auch andere Akkus für beispielsweise 8 V oder dergleichen anstelle der angegebenen vorgesehen sein.

Fig. 4 zeigt eine weitere Ausführungsform, bei der die Kofferschalen durch Scharniere verbunden sind, die im aufgeklappten Zustand des Koffers lösbar sind. Die zweite nicht dargestellte Kofferschale kann bei geöffnetem Koffer nach oben entfernt werden und muß zum Zusammenfügen der beiden Kofferschalen nur in die Scharnierelemente 30 mit den entsprechenden Gegenstücken eingehängt werden.

Diese Ausführungsform weist eine Tiefziehwanne 31 und eine Abdeckplatte 32 auf, wobei der Laptop fest auf die Abdeckplatte 32 montiert ist. Der Drucker 5 ist an der Stirnseite des Laptops 3 angeordnet und befindet sich zwischen Wülsten 33, 34, die an der Tiefziehwanne 31 ausgebildet sind. In dem Wulst 35 sind Bedienelemente 33 und eine Netzbuchse 36 integriert. Die Bedienelemente 33 sind als Folientastatur ausgeführt, die eine Höhe von etwa 2 mm hat und die Leuchtdioden zur Anzeige der Kontrollfunktion aufweist. Unterhalb des Druckers 5 befindet sich eine Ausbuchtung 37 nach innen in die Kofferschale 1, die bis unter die Abdeckplatte 32 reicht und zur Aufnahme von DIN A4-Papier dient.

Durch das Vorsehen eines Stauraumes 38 für Papier, der durch die Ausbuchtung 37, die Abdeckplatte 32 und den Drucker 5 begrenzt ist, liegt das Papier beim Tragen fest im Koffer und zerknittert nicht oder wird sonst wie beschädigt. Obendrein ist dadurch, daß die Papierablage direkt unter dem Drucker angeordnet ist, der Drucker bei Verwendung von DIN A4 Endlospapier jederzeit betriebsfähig, und man braucht nicht jedes Mal, wenn man etwas ausdrucken will, ein neues Papier einlegen, so wie es bei herkömmlichen tragbaren Büro-Arbeitsgeräten üblich war.

Das Papier wird durch einen Spalt zwischen der Stirnseite des Druckers und dem Kofferrand zu dem Drucker geführt, ohne daß es beim Tragen des Koffers aus dem Drucker entfernt werden muß, da es durch den Stauraum 38 fixiert ist.

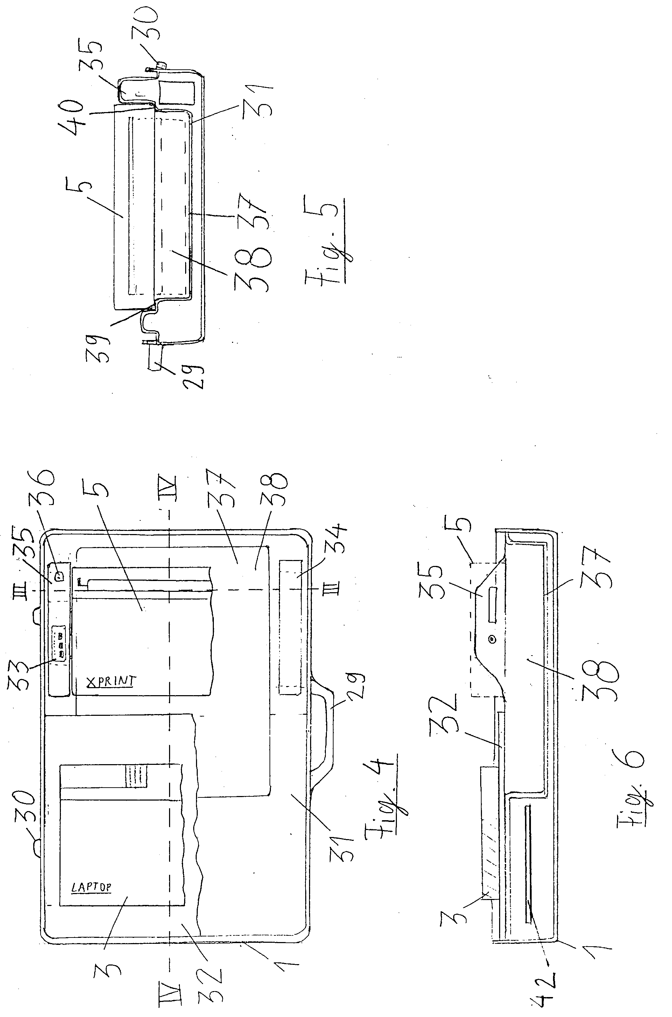

Fig. 5 zeigt eine schematische Schnittansicht längs der Linie III-III in Fig. 4, die die beiden Wülste 34, 35 und den Stauraum 38 darstellt. Die Wülste 34 und 35 sind so angeordnet, daß der Drucker 5 genau zwischen sie paßt und in seitlicher Richtung festgehalten wird. Der Drucker 5 liegt dabei auf zwei Vorsprüngen 39, 40 auf, die innerhalb der Wülste 34, 35 angeordnet sind. Der Wulst 34 ist nur so hoch ausgebildet, daß er die untere seitliche Kante des Druckers 5 umschließt. Dagegen liegt der Drucker 5 auf der gegenüberliegenden Seite mit einem Großteil seiner Seitenfläche an dem höheren Wulst 35 an und ist mit dem Wulst über Steckverbindungen für die Stromversorgung und die Datenschnittstelle verbunden. Der Drucker 5 wird an den Wulst 35 angestellt, indem er über den kleinen Wulst 34 gegen den großen Wulst 35 bewegt wird. Dadurch, daß der Wulst 34 relativ klein ausgebildet ist, behindert er den Ansteckvorgang nicht und dennoch ist der Drucker 5 so für alle Arbeitsvorgänge durch die Wülste 34, 35 in dem tragbaren Büro-Arbeitsgerät ausreichend fest fixiert. Beim Tragen an einem Griff 29, der an der dem Wulst 35 gegenüberliegenden Kofferseite angeordnet ist, liegt der Drucker auf dem großen Wulst 35 auf und kann nicht aus seiner Halterung rutschen.

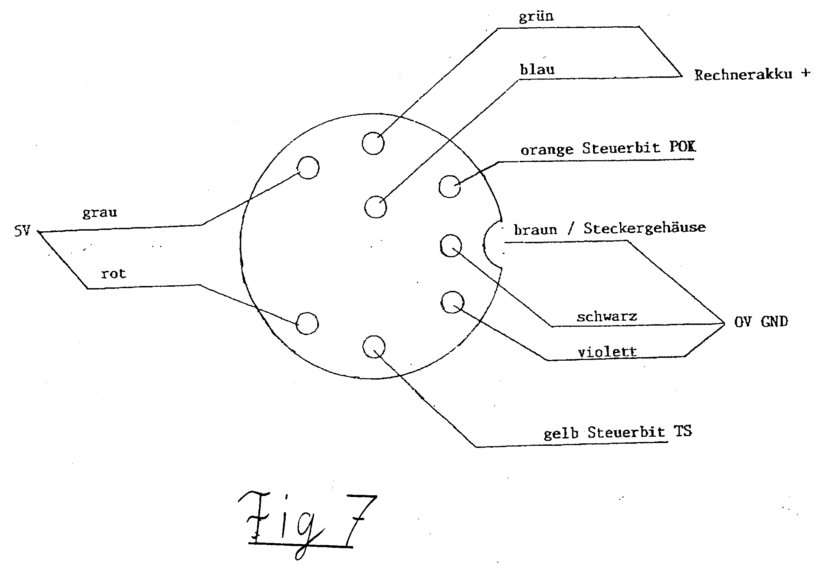

In Fig. 6 ist ein schematischer Querschnitt längs der Linie IV-IV dargestellt. Die Tiefziehwanne umfaßt zwei Abschnitte, einen mit der Ausbuchtung 37 für den Papierstauraum 38 und einen Abschnitt 41 unterhalb der Abdeckplatte 32, in dem sich die Elektronik 42 befindet. Der Laptop 3 liegt vollständig auf der Abdeckplatte 32 auf, die selbst wiederum fest an den Abschnitt 41 der Tiefziehwanne angebracht ist und teilweise den Papierstauraum überdeckt.

Die Elektronik 42 umfaßt im allgemeinen wenigstens ein Netzteil, das über die Anschlußbuchse 36 mit Netzspannung oder über eine andere, nicht dargestellte Anschlußbuchse von der Batterie bzw. Lichtmaschine eines Kraftfahrzeuges versorgt werden kann, wobei die Elektronik die Eingangsspannung entsprechend dem Spannungsbedarf der einzelnen Geräte wie Computer, Drucker, portables Telefon und Modem umsetzt. Die interne Spannung der einzelnen elektronischen Geräte kann sehr unterschiedlich sein und überdeckt im allgemeinen einen Bereich von 5 bis 30 Volt, wobei ein Großteil der Geräte in einem Bereich von 5 bis 12 Volt liegt.

Es ist deshalb eine Ausführungsform mit zwei Netzteilen vorgesehen, beispielsweise für Computer und Drucker, wenn diese beiden Geräte unterschiedliche interne Spannungen aufweisen sollten.

Speziell für den Gebrauch in einem tragbaren Büro-Arbeitsgerät wurde ein Netzteil entwickelt, mit dem die Versorgungsspannungen aller gängigen Computer, Drucker und ähnlichen elektrischen Geräten simuliert werden können. Denn wie die Pinbelegung eines handelsüblichen Steckers eines Laptops, die in Fig. 7 dargestellt ist, zeigt, können die einzelnen elektronischen Geräte selbst eine sehr aufwendige Spannungsversorgung aufweisen. Diese Pinbelegung zeigt zwei Pinpaare (grau und rot; blau und grün), die ein positive Spannung gegenüber der gemeinsamen Masse ( schwarzer u. violletter Pin, Stekkergehäuse) aufweisen, wobei der Ausgang zum Laden von Akkus im Laptop am roten und grauen Pin auf einen Spannungswert von 5 V geregelt ist und der Ausgang am grünen und blauen Pin auf bestimmte Stromwerte in Abhängigkeit der Steuersignale TS (gelber Pin) und POK (oranger Pin) eingestellt wird. Wenn der Akku im Laptop vollständig geladen oder der Laptop eingeschaltet ist, gibt der Laptop das Steuersignal TS ab, wodurch der Ladestrom auf 300 mA begrenzt wird (Ladeerhaltung). Bei ausgeschaltetem Laptop, nicht vollständig geladenem Akku und Netzbetrieb beträgt der Ladestrom 2,25 A, wodurch der Akku schnell aufgeladen wird. Ob ein Netzbetrieb vorliegt wird durch das Steuersignal POK angezeigt, das vom Netzteil erzeugt wird.

Die Versorgungsspannung zum Aufladen des Akkus liegt beispielsweise bei etwa 8 V, wobei dieser Spannungswert im allgemeinen vom Akku abhängt.

Das neu entwickelte Netzteil ist so ausgebildet, daß es mehrere Ausgänge aufweist, die jeweils stufenlos oder schrittweise in Bereichen auf bestimmte Spannungs- oder Stromwerte regelbar sind, die die z. Z. gebräuchlichen internen Spannungen und Ströme der elektronischen Geräte umfassen. Dieses Netzteil ist auch mit einer Ladelogik versehen, so daß die Akkus der einzelnen Geräte nicht überladen oder zu sehr entladen werden. Eine solche Ladelogik ist insbesondere bei der Verwendung von NiCd (Nickel-Cadmium) Akkus vorgesehen, die bei einer Überladung erhitzen, was zu irreparablen Schäden führt. Eine Ladelogik der Elektronik 42 umfaßt wenigstens einen Schwellwertschalter, der variabel auf einen bestimmten Spannungs- bzw. Stromwert zum Schalten einer Ausgangsspannung oder eines Ausgangsstromes einstellbar ist.

Im Koffer selbst ist auch ein Akku vorgesehen, der sich unterhalb oder innerhalb des Wulstes 35 befindet. Dieser Akku ist zum Betreiben des Druckers vorgesehen, kann aber auch zum Betreiben des Computers oder sonstiger angeschlossener elektronischer Geräte verwendet werden. Ferner ist das Netzteil mit einem Kfz-Adapter als Eingang versehen.

Soweit sich die technischen Merkmale aus dem in Fig. 1 bis 3 dargestellten Ausführungsbeispiel nicht ausschließen, gelten sie selbstverständlich auch für das in Fig. 4 bis 7 dargestellte Ausführungsbeispiel.

Mit dem Begriff Laptop sind selbstverständlich alle tragbaren Computer gemeint, auch solche, die unter die neueren Modebezeichnunmgen, wie Notebook oder Palmtops fallen.

**Patentansprüche**

1. Tragbares Büro-Arbeitsgerät,
gekennzeichnet durch
einen Aufbau nach Art und Größe eines Aktenkoffers, in einer oder in dessen beiden Kofferschalen (1, 2) wenigstens ein Laptop-Gerät (3) und ein Drucker (5) sowie eine gemeinsame Stromversorgungseinrichtung gegebenenfalls mit weiteren Geräten, wie Telefax-Gerät und Telefon, fest installiert sind.

2. Arbeitsgerät nach Anspruch 1,
dadurch gekennzeichnet,
daß in einer Kofferschale (1) das Laptop-Gerät (3) und eine Platine angeordnet ist, die von einer Abdeckplatte (4,32) abgedeckt ist, während im anderen Abschnitt der Kofferschale (1) oder in der anderen Kofferschale (2) zumindest ein Drucker (5) und Akkus für die gemeinsame Stromversorgung angeordnet sind.

3. Arbeitsgerät nach den Ansprüchen 1 und 2,
dadurch gekennzeichnet,
daß das Laptop-Gerät (3) auf einer Hubeinrichtung angeordnet ist, mittels der das Laptop-Gerät in eine bequeme Arbeitshöhe relativ zum Kofferrand anhebbar und zur Raumausnutzung bei geschlossenem Koffer absenkbar ist.

4. Arbeitsgerät nach Anspruch 3,
dadurch gekennzeichnet,
daß die Hubeinrichtung elektrisch, pneumatisch oder hydraulisch oder mechanisch betätigbar ist.

5. Arbeitsgerät nach Anspruch 4,
dadurch gekennzeichnet,
daß die Hubeinrichtung über einen Hebel von Hand betätigbar ist, oder
daß das Laptop-Gerät (3) auf einem Träger (11) befestigt ist, der durch eine Führungseinrichtung (13, 15) in der Kofferschale (1) geführt und über Seile (16) mit der anderen Kofferhälfte (2) verbunden ist, und daß auf gegenüberliegenden Seiten des Trägers (11) Spindeln (12) drehbar gelagert sind, auf denen jeweils Seilrollen (14) und Ritzel (15) befestigt sind, wobei die Ritzel (15) mit am Kofferaufbau befestigten Zahnleisten an den Seilrollen (14) die Enden der Seile (16) befestigt sind.

6. Arbeitsgerät nach den vorhergehenden Ansprüchen,
dadurch gekennzeichnet,
daß ein handelsüblicher Aktenkoffer vorgesehen ist, in einer oder dessen beiden Kofferschalen (1, 2) jeweils eine vorgefertigte Wanne (10,31) zur Aufnahme der einzelnen Geräte befestigt ist.

7. Arbeitsgerät nach den vorhergehenden Ansprüchen,
dadurch gekennzeichnet,
daß die Stromversorgungseinrichtung ein gemeinsames Netzteil (20) für den Netzanschluß von 220 V für die verschiedenen Geräte und/oder ein Eingangsteil (21) für den Anschluß an eine 12 V-Autobatterie aufweist, und daß die Stromversorgungseinrichtung eine Schalteinheit (27) für die Stromfreigabe zu den einzelnen Geräten bzw. zum zentralen Ein- und Ausschalten der Geräte aufweist.

8. Arbeitsgerät nach Anspruch 7,
dadurch gekennzeichnet,
daß die Stromversorgungseinrichtung mehrere Ausgänge aufweist, die voneinander unabhängig in einem bestimmten Spannungs- und/oder Strombereich regelbar sind.

9. Arbeitsgerät nach den vorhergehenden Ansprüchen,
dadurch gekennzeichnet,
daß die Wanne (31) einen Abschnitt mit einer Ausbuchtung (37) für einen Papierstauraum (38) aufweist, und daß der Papierstauraum (38) durch die Ausbuchtung (37), und insbesondere der Abdeckplatte (32) und dem Drucker (5) begrenzt ist.

10. Arbeitsgerät nach den vorhergehenden Ansprüchen,
dadurch gekennzeichnet,
daß die Wanne (31) mit zwei Wülsten (34,35) versehen ist,
daß der Drucker (5) genau zwischen sie paßt,
daß innerhalb der Wülste (34,35) Bereiche zur Auflage des Druckers vorgesehen sind,
daß der Wulst (34), der an einer mit einem Tragegriff (29) versehenen Kofferschalenseite ausgebildet ist, eine geringere Höhe als der gegenüberliegende Wulst (35) aufweist, und
daß der Wulst (35) Steckverbindungen für eine Stromversorgung und den Datenleitungen aufweist.

11. Arbeitsgerät nach den vorhergehenden Ansprüchen,
dadurch gekennzeichnet,
daß die Stromversorgungseinrichtung wenigstens einen Schwellwertschalter zum Steuern des Ladevorgangs aufweist, der auf einen bestimmten Spannungs- bzw. Stromwert einstellbar ist.

Fig.1a

Fig.2

Fig.1b

Fig.1

EP 0 487 113 A1

Fig. 3

Fig. 4

Fig. 5

Fig. 6

XPRINT

LAPTOP

Fig 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 896 776 (KABANUK ET AL.) <br><br> * Spalte 3, Zeile 32 – Spalte 6, Zeile 15; Abbildungen * | 1,2,6,7, 9 | G06F1/16 <br> A45C5/12 |
| Y | | 3,4,10 | |
| Y | IBM TECHNICAL DISCLOSURE BULLETIN. <br> Bd. 29, Nr. 7, Dezember 1986, NEW YORK US <br> Seiten 3012 – 3013; 'lift mechanism' <br> * das ganze Dokument * <br> --- | 3,4 | |
| X | US-A-4 790 431 (REEL ET AL.) <br> * Spalte 2, Zeile 63 – Spalte 5, Zeile 11; Abbildungen * | 1,2,6,9 | |
| Y | --- | 10 | |
| P,X | DE-U-9 101 714 (KLEY) <br> * Ansprüche; Abbildungen * <br> --- | 1,3,4 | |
| X | DE-U-8 913 455 (FLIEGE SCHMUCKER) <br> * Seite 6, Zeile 27 – Seite 8, Zeile 6; Abbildungen * <br> --- | 1,2,6 | **RECHERCHIERTE SACHGEBIETE (Int. Cl.5 )** |
| X | GB-A-2 176 322 (NEW TECHNOLOGY SYSTEMS) <br> * Ansprüche; Abbildungen * <br> --- | 1,2,8 | G06F <br> A45C |
| A | US-A-4 946 300 (MAKITA) <br> * Zusammenfassung; Abbildungen * <br><br> ----- | 3-5 | |

Der vorliegende Recherchenbericht wurde für alle Patentansprüche erstellt

| Recherchenort | Abschlußdatum der Recherche | Prüfer |
|---|---|---|
| DEN HAAG | 16 MAERZ 1992 | PERNEY Y. |